(19) Europäisches Patentamt / European Patent Office / Office européen des brevets

(11) **EP 4 273 011 A1**

(12) **EUROPEAN PATENT APPLICATION**
published in accordance with Art. 153(4) EPC

(43) Date of publication:
**08.11.2023 Bulletin 2023/45**

(21) Application number: **21913285.9**

(22) Date of filing: **27.09.2021**

(51) International Patent Classification (IPC):
**B60W 30/18** (2012.01)

(52) Cooperative Patent Classification (CPC):
**B60W 30/18**

(86) International application number:
**PCT/CN2021/121062**

(87) International publication number:
**WO 2022/142540 (07.07.2022 Gazette 2022/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.12.2020 CN 202011633502**

(71) Applicant: **United Automotive Electronic Systems Co., Ltd.**
**Shanghai 201206 (CN)**

(72) Inventors:
• **YAN, Ting**
  **Shanghai 201206 (CN)**
• **CHENG, Yujiao**
  **Shanghai 201206 (CN)**

(74) Representative: **Bjerkén Hynell KB**
**Tulegatan 53**
**113 53 Stockholm (SE)**

(54) **NEW ENERGY VEHICLE COASTING CONTROL SYSTEM AND METHOD BASED ON INTELLIGENT NETWORKING INFORMATION, AND NEW ENERGY VEHICLE**

(57) The present application discloses an intelligent connected information-based new energy vehicle coasting control system. With the assistance of an intelligent connected function, driver pedal release prompt information is automatically outputted based on future deceleration scenario information, notifying the driver in advance to release the pedal at an appropriate time so as to implement coasting. After the pedal is released to implement coasting, an optimal economic speed curve for the coasting condition is automatically planned and followed to enable the vehicle to travel to a deceleration region in the most energy-saving coasting mode, avoiding a loss of energy consumption conversion caused by the driver first stepping on an accelerator and then stepping on a brake, achieving a coasting distance and ensuring the drivability while recovering kinetic energy as much as possible, improving the endurance distance of the entire vehicle. The present application also discloses an intelligent connected information-based new energy vehicle coasting control method and a new energy vehicle.

FIG. 2

EP 4 273 011 A1

## Description

### TECHNICAL FIELD

The present application relates to new energy vehicle technologies, in particular to an intelligent connected information-based new energy vehicle coasting control system and method, and a new energy vehicle.

### BACKGROUND

In recent years, new energy vehicles have gradually become the mainstream of the automotive market due to their good energy-saving and emission reduction performance and the active guidance of national policies. The new energy vehicle may effectively reduce energy consumption by: on the one hand, improving energy conversion efficiency by using a reasonable energy distribution strategy, and particularly on the other hand, coasting as far as possible during the deceleration motion and when necessary, charging the battery by way of recovering braking energy using a motor, so as to reduce the energy consumption. The former has been analyzed from various aspects and perspectives in many documents and thus is not discussed herein, and the main focus is on the latter.

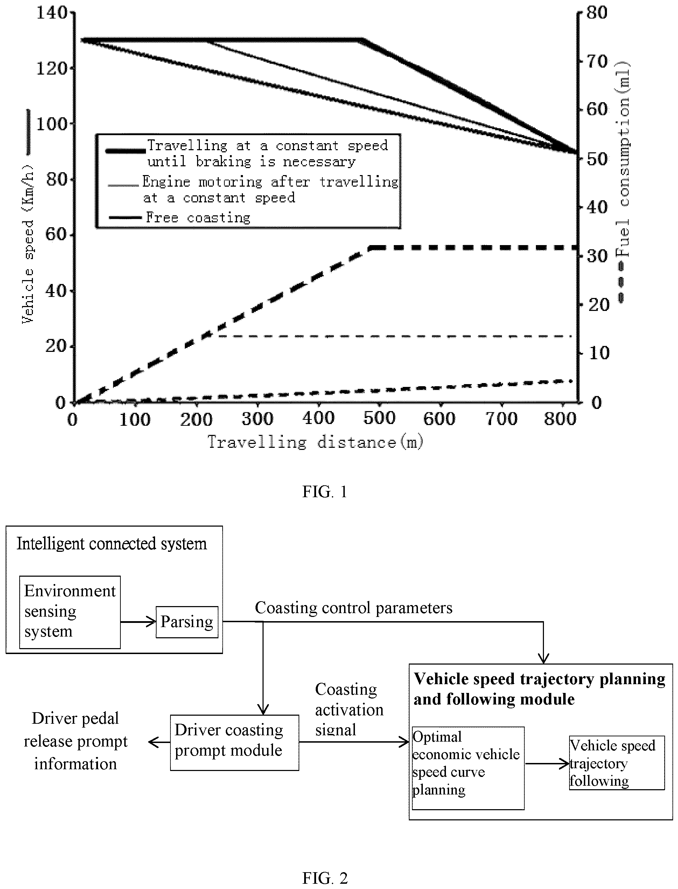

The deceleration motion of a vehicle includes braking and coasting processes. In the braking process, the motor can recover braking energy to improve the economy of the entire vehicle, but the recovery is often accompanied by a mechanical friction loss. In the coasting process, the above energy loss can be effectively avoided by a reasonable arrangement of the motor recovery torque. In fact, fuel saving during coasting has great potential. Referring to FIG. 1, among three travelling conditions (full constant speed, constant speed initially, and full coasting), fuel consumption in the full coasting condition is the lowest on the premise of the same travelling distance. In addition, compared to other energy-saving measures, maximizing coasting to avoid losses from driving the engine accounts for the largest proportion of all the energy-saving measures. According to literature statistics, the coasting time can reach up to 35% to 50% of the travelling time under different operating conditions, and a coasting recovery function can improve the fuel economy by up to 12%. It can be seen that the coasting recovery function is one of the important measures to improve the economy of new energy vehicles.

However, the advantages of the coasting recovery function are difficult to be embodied in the current strategy. On the one hand, in the actual travelling process, a driver often cannot decide when to release the accelerator pedal to smoothly coast to a deceleration region ahead, resulting in unnecessary losses in driving and braking energy conversion. On the other hand, the strategy does not consider ways to maximize coasting energy recovery, resulting in a loss of some recoverable energy. The forward-looking vehicle control is required to solve both of the above problems, that is, it is necessary to learn a deceleration demand ahead so as to make a decision in advance, which cannot be achieved without the input of intelligent connected information.

With increasingly widespread application of the intelligent connected technology, currently basic information about a road ahead can be acquired by means of radar, cameras, or high-precision maps, etc. If it is determined from the information that there is an imminent deceleration demand, for example, a traffic congestion, an obstacle, or a speed limiting region, etc. is detected in the road ahead, the driver may be timely prompted based on the existing information to release the accelerator and brake pedal, enter the coasting condition ahead of the driver's visual range, an optimized coasting speed trajectory can be planned in advance, coasting energy can be recovered within limited conditions, thus achieving the object of improving the economy of the entire vehicle.

Intelligent Connected Vehicle (ICV) refers to the organic combination of the Internet of Vehicles and intelligent vehicles, which is a new generation vehicle equipped with advanced vehicle-mounted sensor, controller, actuator, and other apparatuses, integrating the modem communication and network technology to achieve intelligent information exchange and sharing between the vehicle and the driver, vehicles, road, and background, achieving safe, comfortable, energy-saving, and efficient travelling, and ultimately replacing the driver to perform operations. The China Industry Innovation Alliance for the Intelligent Connected Vehicles aims to improve the relevant standards and regulations in the field of intelligent connected vehicles via collaborative innovation and technology sharing, establishes a common technology platform, promotes the formation of demonstration pilot projects, and promotes the construction of a sustainable development environment for the intelligent connected vehicle industry.

### BRIEF SUMMARY

The technical problem to be solved by the present application is to enable a vehicle to travel to a deceleration region in the most energy-saving coasting mode, avoiding a loss of energy consumption conversion caused by a driver first stepping on an accelerator and then stepping on a brake, achieving a coasting distance and ensuring the drivability while recovering kinetic energy as much as possible, improving the endurance distance of the entire vehicle, reflecting the energy-saving potential of a coasting deceleration scenario to the greatest degree on the premise of ensuring the drivability and safety, effectively improving energy-saving and emission reduction effects of the vehicle, and relieving the concern and anxiety of the driver about deceleration.

In order to solve the above technical problem, the present application provides an intelligent connected information-based new energy vehicle coasting control system, including an intelligent connected system, a driver coasting prompt module, and a vehicle speed trajectory planning and following module.

The intelligent connected system is used for parsing intelligent connected information collected by an environment sensing system to obtain coasting control parameters, the coasting control parameters including a distance $s_f$ from a vehicle to a deceleration region ahead and a vehicle's future target speed $V_f$.

When the distance $s_f$ from the vehicle to the deceleration region ahead is less than a coasting distance $s_0$ by which the vehicle at a current vehicle speed $V_0$ coasts until reaching the vehicle's future target speed $V_f$, the driver coasting module outputs a coasting activation signal to the vehicle speed trajectory planning and following module and outputs driver pedal release prompt information.

After a pedal is released, the vehicle speed trajectory planning and following module, after receiving the coasting activation signal, plans an optimal economic vehicle speed curve on the basis of an optimization algorithm, and controls vehicle coasting and kinetic energy recovery on the basis of the optimal economic vehicle speed curve.

In an example, when the vehicle reaches the deceleration region ahead, the driver coasting module outputs a coasting exit signal to the vehicle speed trajectory planning and following module.

After receiving the coasting exit signal, the vehicle speed trajectory planning and following module disables a vehicle speed trajectory planning and following function.

In an example, the coasting control parameters further include a slope angle $\beta$:

$$s_0 = \frac{v_0^2 - v_f^2 - \sum \frac{C_D \rho A v^3}{m}}{2(\mu g \cos \beta + g \sin \beta)}; \quad v = V_0 + \alpha T; \quad \alpha = -\mu g \cos \beta - m \sin \beta - \frac{C_D \rho A v^2}{2m};$$

in the formula, $V_0$ is the current vehicle speed, $C_D$ is an aerodynamic drag coefficient, $\rho$ is air density, $A$ is a frontal area, m is a vehicle mass, $\mu$ is a rolling resistance coefficient, g is gravitational acceleration, $\alpha$ is vehicle acceleration, $v$ represents a predicted coasting process vehicle speed, which is iteratively calculated from the vehicle acceleration $\alpha$ calculated by the longitudinal dynamics formula and the current vehicle speed $V_0$, and $T$ represents a discrete time interval.

In an example, when the distance $s_f$ from the vehicle to the deceleration region ahead is less than the coasting distance $s_0$ by which the vehicle at the current vehicle speed $V_0$ coasts until reaching the vehicle's future target speed $V_f$ and is greater than a minimum deceleration distance $s_1$, $0 < s_1 < s_0$, the driver coasting module outputs the coasting activation signal to the vehicle speed trajectory planning and following module and outputs the driver pedal release prompt information.

In an example, the driver coasting module calculates the minimum deceleration distance on the basis of a maximum motor recovery torque $T_{min}$ and maximum deceleration $\alpha_{max}$ for acceptable driving sensations.

In an example, the driver coasting module is calibrated with the aerodynamic drag coefficient $C_D$, the air density $\rho$, the frontal area $A$, the rolling resistance coefficient $\mu$, the maximum motor recovery torque $T_{min}$, and the maximum deceleration $\alpha_{max}$ for acceptable driving sensations.

In an example, the driver coasting module obtains the vehicle mass m via iterative calculation using a recursive least square method, or is calibrated with the vehicle mass m.

In an example, the rolling resistance coefficient $\mu$ is obtained by first obtaining a vehicle speed curve using a coasting method and then fitting the vehicle speed curve into a quadratic polynomial of the vehicle speed.

In an example, the intelligent connected information collected by the environment sensing system includes information on traffic ahead, information on traffic lights ahead, and navigation information.

In an example, the environment sensing system includes at least one of a high-precision radar, a high-resolution camera, and a high-precision map.

In an example, the new energy vehicle is a hybrid electric vehicle, a motor and an internal combustion engine in a vehicle power transmission chain structure are decouplable, and the vehicle can be driven independently by the motor; or the new energy vehicle is a pure electric vehicle.

After the pedal is released, the vehicle speed trajectory planning and following module, after receiving the coasting activation signal, plans a constant deceleration vehicle speed curve as the optimal economic vehicle speed curve on the basis of the current vehicle speed $V_0$, the vehicle's future target speed $V_f$, and the distance $s_f$ from the vehicle to the deceleration region ahead, and controls the vehicle speed to follow the optimal economic vehicle speed curve, so as to drive the motor and recover kinetic energy.

In an example, the new energy vehicle is a hybrid electric vehicle, and a motor and an internal combustion engine in a power transmission chain structure are not decouplable; after the pedal is released, the vehicle speed trajectory planning and following module, after receiving the coasting activation signal, plans the optimal economic vehicle speed curve, which is divided by a recovery start moment into two stages: a preceding pure coasting non-recovery stage and a later constant deceleration coasting recovery stage.

During the pure coasting non-recovery phase, the vehicle speed trajectory planning and following module operates to apply no driving force to the vehicle, so as to implement pure coasting; and during the constant deceleration coasting recovery stage, the vehicle speed trajectory planning and following module plans a constant deceleration vehicle speed curve as the optimal economic vehicle speed curve of the constant deceleration coasting recovery stage on the basis of a vehicle speed at the recovery start moment, a distance from the vehicle to the deceleration region ahead at the recovery start moment, and the vehicle's future target speed $V_f$, and controls the vehicle speed to follow the optimal economic vehicle speed curve of the constant deceleration coasting recovery stage, so as to drive the engine and motor and recover kinetic energy.

In an example, the vehicle speed trajectory planning and following module calculates a time by which the vehicle speed at a pedal release moment reduces to the vehicle's future target speed, divides the time into multiple discrete moments using a discrete time interval T, and performs iterative calculation to obtain cumulative recovered electric energy of the constant deceleration from the current vehicle speed to the vehicle's future target speed by using each discrete moment as the recovery start moment, wherein a discrete moment corresponding to maximum cumulative recovered electric energy among all the discrete moments is taken out and used as the recovery start moment $t_{strt}$, i.e., the moment for starting to drive the engine.

The $k$-th discrete moment corresponds to cumulative recovered electric energy $J_k$, which is obtained by subtracting rolling resistance work, aerodynamic drag work, engine starting energy consumption, and driving engine energy consumption from vehicle kinetic energy.

In an example, when determining the recovery start time $t_{strt}$, the discrete time points at which the absolute value of deceleration during the constant deceleration coasting recovery stage is greater than a preset acceleration are abandoned, and the discrete time point at which the deceleration time from the current vehicle speed $V_0$ to the vehicle's future target speed $V_f$ is greater than a preset time length is abandoned. With regard to the driving sensations during deceleration, the discrete time points corresponding to excessive deceleration and excessive coasting time will be discarded.

In an example, the preset acceleration is between 2 meters per second squared and 3 meters per second squared.

In an example, the intelligent connected information collected by the environment sensing system includes vehicle ahead information, current vehicle information, information on traffic ahead, information on traffic lights ahead, and navigation information.

After the pedal is released, the vehicle speed trajectory planning and following module, after receiving the coasting activation signal, plans the optimal economic vehicle speed curve on the basis of the current vehicle speed $V_0$ at a pedal release moment, the vehicle's future target speed $V_f$, the distance $s_f$ from the vehicle to the deceleration region ahead, vehicle ahead speed, and a distance from the vehicle ahead to the current vehicle, and controls the vehicle speed to follow the optimal economic vehicle speed curve, so as to drive the engine and motor and recover kinetic energy.

In an example, the vehicle ahead information and the current vehicle information each include a position and a vector speed.

In an example, the vehicle speed trajectory planning and following module includes an MPC controller.

The MPC controller selects an MPC algorithm to perform the following control, and controls the vehicle speed to follow the optimal economic vehicle speed curve, so as to drive the engine and motor and recover kinetic energy.

In an example, the MPC controller includes an AMPC algorithm module, a state observer, and a model linearization module.

Based on Kalman filtering, the state observer obtains an optimal estimated value $\hat{x}(k)$ of a group of state variables according to an actual measured output $y(k)$ of the motor recovery torque.

The model linearization module is used for linearizing a vehicle longitudinal dynamics model.

The AMPC algorithm module is used for calculating a torque control amount w according to the linearized vehicle longitudinal dynamics model, the optimal economic vehicle speed curve $r(i)$, and the optimal estimated value $\hat{x}(k)$ of the state variables, and controlling the motor recovery torque.

In an example, at each time node, the state observer needs to perform iterative calculation on an observation gain matrix K by using a covariance matrix of a model predicted value

$$\dot{x}(k)$$

and the actual measured output $y(k)$, so as to obtain the optimal estimated value $\hat{x}(k)$ of the group of state variables by means of a calculation formula of the model predicted value

$$\dot{x}(k)$$

:

$$\hat{x}(k) = \dot{x}(k) + K \cdot (y(k) - \dot{x}(k));$$

in the formula, K is the observation gain matrix.

In an example,

$$Q = \sum_{i=k+1}^{k+p}(y_p(i|k) - r(i))^2;$$

$$w_{min} \leq w \leq w_{max};$$

and

$$\Delta w_{min} \leq \Delta w \leq \Delta w_{max};$$

wherein Q is an objective function, a target trajectory $r(i)$ is the optimal economic vehicle speed curve, $y_p(i|k)$ is obtained by real-time iteration of the linearized vehicle longitudinal dynamics model, $p$ is a positive integer, w is the torque control amount, $w_{max}$ and $w_{min}$ represent upper and lower limits of motor demand torque obtained from charging performance limitations of the motor and battery, and $\Delta w_{max}$ and $\Delta w_{min}$ are upper and lower limits of a change rate of the motor demand torque taking into consideration the driving sensations.

In the AMPC algorithm module, the objective function Q selects and accumulates differences between the output $y_p(i|k)$ of the discrete model within a prediction time domain window ($T_p = [k + 1: k + p]$) and the target trajectory $r(i)$, and based on the objective function Q, the optimal estimated value $\hat{x}(k)$ of the state variables, and constraints $w_{max}$, $w_{min}$, $\Delta w_{max}$, $\Delta w_{min}$, optimization in each prediction time domain is achieved by means of Lagrange operator-based linear quadratic programming, obtaining a control variable sequence with a minimum objective function in the corresponding prediction time domain, wherein a first value is used as the current torque control amount w and sent to the motor, and the current process is repeated at the next moment.

In an example, the model linearization module linearizes the vehicle longitudinal dynamics model by means of Taylor expansion at each time point in the prediction time domain.

In order to solve the above technical problem, the present application also provides an intelligent connected information-based new energy vehicle coasting control method, wherein coasting control parameters are obtained by parsing intelligent connected information collected by an environment sensing system of an intelligent connected system, the coasting control parameters including a distance $s_f$ from a vehicle to a deceleration region ahead and a vehicle's future target speed $V_f$.

When the distance $s_f$ from the vehicle to the deceleration region ahead is less than a coasting distance $s_0$ by which the vehicle at a current vehicle speed $V_0$ coasts until reaching the vehicle's future target speed $V_f$, a driver coasting module outputs a coasting activation signal to the vehicle speed trajectory planning and following module and outputs driver pedal release prompt information.

After a pedal is released, a vehicle speed trajectory planning and following module, after receiving the coasting activation signal, plans an optimal economic vehicle speed curve on the basis of an optimization algorithm, and controls vehicle coasting and kinetic energy recovery on the basis of the optimal economic vehicle speed curve.

The present application also provides a new energy vehicle equipped with the intelligent connected information-based new energy vehicle coasting control system.

In the present application, outside a driver sight distance, with the assistance of an intelligent connected function, the driver pedal release prompt information is automatically outputted based on future deceleration scenario information, notifying the driver in advance to release the pedal at an appropriate time so as to implement coasting. After the pedal is released to implement coasting, the optimal economic speed curve for the coasting condition is automatically planned and followed to enable the vehicle to travel to a deceleration region in the most energy-saving coasting mode, avoiding a loss of energy consumption conversion caused by the driver first stepping on an accelerator and then stepping on a brake, achieving a coasting distance and ensuring the drivability while recovering kinetic energy as much as possible, improving the endurance distance of the entire vehicle, reflecting the energy-saving potential of a coasting deceleration scenario to the greatest degree on the premise of ensuring the drivability and safety, effectively improving energy-saving and emission reduction effects of the vehicle, and relieving the concern and anxiety of the driver about deceleration.

**BRIEF DESCRIPTION OF THE DRAWINGS**

In order to more clearly illustrate the technical solution of the present application, drawings of the present application are briefly described below. Obviously, the drawings described below are only some embodiments of the present application. For those skilled in the art, other drawings can be obtained from these drawings without the exercise of any inventive skill.

FIG. 1 shows fuel consumption curves under three travelling conditions at the same distance.

FIG. 2 is a diagram of an intelligent connected information-based new energy vehicle coasting control system according to an embodiment of the present application.

FIG. 3 is a schematic diagram of determining a vehicle speed trajectory planning and following activation interval.

**DETAILED DESCRIPTION OF THE DISCLOSURE**

The technical solutions of the present application are clearly and completely described below with reference to the drawings. Obviously, the described embodiments are part of the embodiments of the present application, rather than all of them. Based on the embodiments in the present application, all other embodiments obtained by those of ordinary skills in the art without the exercise of any inventive skill shall fall within the scope of protection of the present application.

Embodiment 1

Referring to FIG. 2, an intelligent connected information-based new energy vehicle coasting control system includes an intelligent connected system, a driver coasting prompt module, and a vehicle speed trajectory planning and following module.
The intelligent connected system is used for parsing intelligent connected information collected by an environment sensing system to obtain coasting control parameters, the coasting control parameters including a distance $s_f$ from a vehicle to a deceleration region ahead and a vehicle's future target speed $V_f$ (maximum speed limit in the deceleration area);
When the distance $s_f$ from the vehicle to the deceleration region ahead is less than a coasting distance $s_0$ by which the vehicle at a current vehicle speed $V_0$ coasts until reaching the vehicle's future target speed $V_f$, the driver coasting module outputs a coasting activation signal to the vehicle speed trajectory planning and following module and outputs driver pedal release prompt information.
After a pedal is released, the vehicle speed trajectory planning and following module, after receiving the coasting activation signal, plans an optimal economic vehicle speed curve on the basis of an optimization algorithm, and controls vehicle coasting and kinetic energy recovery on the basis of the optimal economic vehicle speed curve.
In an example, when the vehicle reaches the deceleration region ahead, the driver coasting module outputs a coasting exit signal to the vehicle speed trajectory planning and following module.
After receiving the coasting exit signal, the vehicle speed trajectory planning and following module disables a vehicle speed trajectory planning and following function.
In the new energy vehicle coasting control system of embodiment 1, with the assistance of an intelligent connected function, the driver pedal release prompt information is automatically outputted based on future deceleration scenario information, notifying the driver in advance to release the pedal at an appropriate time so as to implement coasting. After the pedal is released to implement coasting, the optimal economic speed curve for the coasting condition is automatically planned and followed to enable the vehicle to travel to a deceleration region in the most energy-saving coasting mode, avoiding a loss of energy consumption conversion caused by the driver first stepping on an accelerator and then stepping on a brake, achieving a coasting distance and ensuring the drivability while recovering kinetic energy as much as possible, improving the endurance distance of the entire vehicle, reflecting the energy-saving potential of a coasting deceleration scenario to the greatest degree on the premise of ensuring the drivability and safety, effectively improving energy-saving and emission reduction effects of the vehicle, and relieving the concern and anxiety of the driver about deceleration.

Embodiment 2

In the new energy vehicle coasting control system based on embodiment 1, the coasting control parameters further include a slope angle $\beta$:

$$s_0 = \frac{v_0^2 - v_f^2 - \sum\frac{C_D\rho Av^3}{m}}{2(\mu g\cos\beta + g\sin\beta)}; \quad v = V_0 + \alpha T; \quad \alpha = -\mu g\cos\beta - m\sin\beta - \frac{C_D\rho Av^2}{2m};$$

in the formula, $V_0$ is the current vehicle speed, $C_D$ is an aerodynamic drag coefficient, $\rho$ is air density, $A$ is a frontal area, m is a vehicle mass, $\mu$ is a rolling resistance coefficient, g is gravitational acceleration, $\alpha$ is vehicle acceleration, $v$ represents a predicted coasting process vehicle speed, which is iteratively calculated from the vehicle acceleration $\alpha$ calculated by the longitudinal dynamics formula and the current vehicle speed $V_0$, and $T$ represents a discrete time interval.

Vehicle model parameters of the new energy vehicle coasting control system are estimated as follows:

Forces applied to the vehicle during travelling are in three directions: the longitudinal, vertical, and lateral directions. Correspondingly, the content of vehicle dynamics mainly includes driving and braking, vehicle vibration, and handling stability in travelling. In longitudinal dynamics, acceleration during vehicle travelling is determined by a difference between a vehicle driving force and a travelling resistance. A vehicle longitudinal dynamics model is as follows:

$$m\alpha = F_t - F_R - F_w - F_i.$$

$\boldsymbol{F_t}$ is the vehicle driving force, $\boldsymbol{F_R}$ is a rolling resistance, $\boldsymbol{F_w}$ is an air resistance, and $\boldsymbol{F_i}$ is a gradient resistance. To determine a vehicle's future speed trajectory, it is necessary to determine the vehicle acceleration, that is, it is necessary to determine values of the driving force and all the travelling resistances in the above formula.

The vehicle driving force $\boldsymbol{F_t}$ can be obtained directly from a torque transmitted from a power take-off (engine or motor) to a wheel end via a transmission chain.

The gradient resistance $\boldsymbol{F_i} = \boldsymbol{mgsin\beta}$ is mainly determined by the slope angle $\beta$ and is a main travelling resistance item.

The rolling resistance $\boldsymbol{F_R} = \boldsymbol{\mu mgcos\beta}$ is mainly determined by the slope angle $\beta$ and the rolling resistance coefficient $\mu$ jointly, having more affecting factors.

The air resistance $F_w = \frac{C_D\rho Av^2}{2}$ is mainly determined by the aerodynamic drag coefficient $C_D$, wherein the air density $\rho$ and the frontal area $A$ both are constant values.

Several important parameters affecting the above resistances include the vehicle mass m, the slope angle $\beta$, the aerodynamic drag coefficient $C_D$, and rolling resistance coefficient $\mu$.

In the case when a coasting distance $s_0$ by which the vehicle at the current vehicle speed $V_0$ coasts until reaching the vehicle's future target speed $V_f$ (maximum speed limit in the deceleration area) is equal to the distance $s_f$ from the vehicle to the deceleration region ahead, energy consumption is lowest because according to the law of conservation of energy, the kinetic energy of the vehicle is fully consumed by road resistance work, without any energy conversion loss, i.e.:

$$s_f = s_0 = \frac{v_0^2 - v_f^2 - \sum\frac{C_D\rho Av^3}{m}}{2(\mu g\cos\beta + g\sin\beta)}.$$

When it is detected that the coasting distance $\boldsymbol{s_f}$ is less than $\boldsymbol{s_0}$, it indicates that the vehicle cannot decelerate from the current vehicle speed $V_0$ to upper limit speed $V_f$ of the deceleration region within the coasting distance $\boldsymbol{s_f}$ by relying solely on the travelling resistances. In this case, it is necessary to increase the deceleration by means of a deceleration effect of motor energy recovery. Considering a driver reaction time, it is generally recommended to prompt the driver to release the accelerator pedal at a moment of $\boldsymbol{s_f} \leq \boldsymbol{s_0} + \delta$, wherein $\delta$ is a distance adjustment coefficient.

Embodiment 3

In the new energy vehicle coasting control system based on embodiment 2, when the distance $s_f$ from the vehicle to the deceleration region ahead is less than the coasting distance $s_0$ by which the vehicle at the current vehicle speed $V_0$ coasts until reaching the vehicle's future target speed $V_f$ and is greater than a minimum deceleration distance $s_1$, $0 < s_1 < s_0$, the driver coasting module outputs the coasting activation signal to the vehicle speed trajectory planning and following module and outputs the driver pedal release prompt information.

In an example, the driver coasting module calculates the minimum deceleration distance on the basis of a maximum motor recovery torque $T_{min}$ and maximum deceleration $\alpha_{max}$ for an acceptable driving sensation.

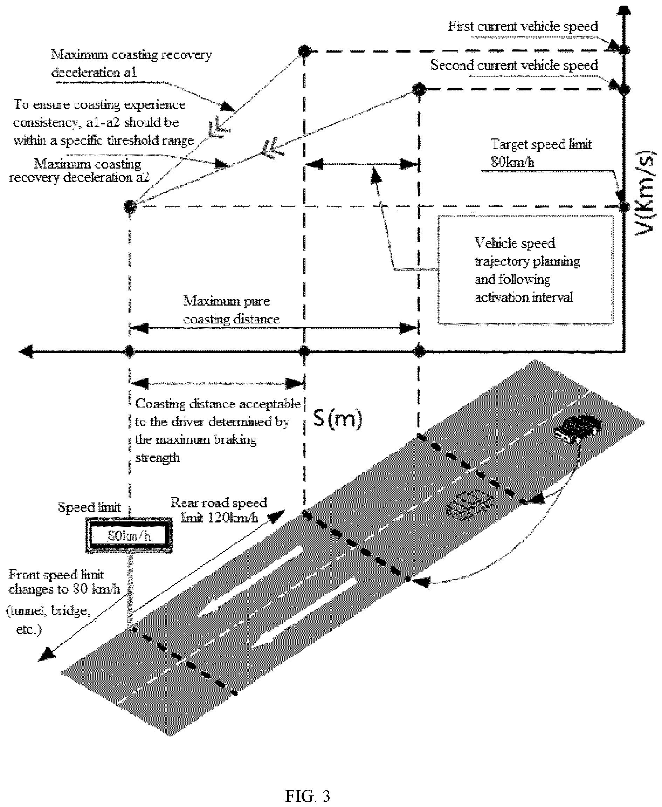

In the new energy vehicle coasting control system of embodiment 3, considering the limitation of motor recovery torque and differences in the driving sensations, when the distance from the vehicle to a target deceleration site is excessively short, the vehicle cannot reduce the vehicle speed below the target vehicle speed by relying solely on the motor braking ability. Moreover, excessive deceleration may cause strong discomfort to the driver. Therefore, referring to FIG. 3, only when the vehicle is within a vehicle speed trajectory planning and following activation interval (the distance $s_f$ from the vehicle to the deceleration region ahead is less than the coasting distance $s_0$ by which the vehicle at the current vehicle speed $V_0$ coasts until reaching the vehicle's future target speed $V_f$ and is greater than the minimum deceleration distance $s_1$), the driver coasting module outputs the driver pedal release prompt information, achieving a coasting distance and ensuring the drivability while recovering kinetic energy as much as possible.

Embodiment 4

In the new energy vehicle coasting control system based on embodiment 3, the driver coasting module is calibrated with the drag coefficient $C_D$, the air density $\rho$, the frontal area $A$, the rolling resistance coefficient $\mu$, the maximum motor recovery torque $T_{min}$, and the maximum deceleration $\alpha_{max}$ for an acceptable driving sensation.

In an example, the driver coasting module obtains the vehicle mass m via iterative calculation using a recursive least square method, or is calibrated with the vehicle mass m. The vehicle mass m does not change much during travelling (the mass of a fuel vehicle decreases as fuel is consumed), so the calculation frequency does not need to be very high. Therefore, the vehicle mass generally can be obtained via the iterative calculation using the recursive least square method.

In an example, the rolling resistance coefficient $\mu$ is obtained by first obtaining a vehicle speed curve using a coasting method and then fitting the vehicle speed curve into a quadratic polynomial of the vehicle speed. The rolling resistance coefficient $\mu$ is substantially invariant on an ordinary urban road or elevated road, and thus may be obtained by first obtaining the vehicle speed curve using the coasting method and then fitting the vehicle speed curve into the quadratic polynomial of the vehicle speed.

In the new energy vehicle coasting control system of embodiment 4, the aerodynamic drag coefficient $C_D$ is affected by the weather environment, but changes within a relatively small range and has little impact on acceleration, and can be obtained via calibration.

Embodiment 5

In the new energy vehicle coasting control system based on embodiment 1, the intelligent connected information collected by the environment sensing system includes information on traffic ahead, information on traffic lights ahead, and navigation information, etc.

In an example, the environment sensing system includes at least one of a high-precision radar, a high-resolution camera, and a high-precision map.

In the new energy vehicle coasting control system of embodiment 5, the intelligent connected system obtains the coasting control parameters by parsing the intelligent connected information collected by the environment sensing system, and uses these coasting control parameters as start conditions, application scenarios, and completion conditions required by functional algorithms.

Embodiment 6

In the new energy vehicle coasting control system based on embodiment 1, the new energy vehicle is a hybrid electric vehicle, a motor and an internal combustion engine in a vehicle power transmission chain structure are decouplable, and the vehicle can be driven independently by the motor; or the new energy vehicle is a pure electric vehicle.

After the pedal is released, the vehicle speed trajectory planning and following module, after receiving the coasting activation signal, plans a constant deceleration vehicle speed curve as the optimal economic vehicle speed curve on the basis of the current vehicle speed $V_0$, the vehicle's future target speed $V_f$, and the distance $s_f$ from the vehicle to the deceleration region ahead, and controls the vehicle speed to follow the optimal economic vehicle speed curve, so as to drive the motor and recover kinetic energy.

The hybrid electric vehicle generally refers to a hybrid gas-electric vehicle (HEV), which uses a conventional internal combustion engine (diesel or gasoline engine) and a motor as power sources. Engines of some of the vehicles are improved to use other alternative fuels, such as compressed natural gas, propane, and ethanol, etc.

In the new energy vehicle coasting control system of embodiment 6, for the new energy vehicle that can be driven solely by a motor, considering the consistency of the driving sensations during deceleration, the vehicle speed trajectory planning and following module thereof plans a constant deceleration vehicle speed curve as the corresponding optimal economic vehicle speed curve on the basis of the current vehicle speed $V_0$ at a pedal release moment, the vehicle's future target speed $V_f$, and the distance $s_f$ from the vehicle to the deceleration region ahead.

Embodiment 7

In the new energy vehicle coasting control system based on embodiment 1, the new energy vehicle is a hybrid electric vehicle, and a motor and an internal combustion engine in a power transmission chain structure are not decouplable; after the pedal is released, the vehicle speed trajectory planning and following module, after receiving the coasting activation signal, plans the optimal economic vehicle speed curve, which is divided by a recovery start moment into two stages: a preceding pure coasting non-recovery stage and a later constant deceleration coasting recovery stage.

During the pure coasting non-recovery phase, the vehicle speed trajectory planning and following module operates to apply no driving force to the vehicle, so as to implement pure coasting; and during the constant deceleration coasting recovery stage, the vehicle speed trajectory planning and following module plans a constant deceleration vehicle speed curve as the optimal economic vehicle speed curve of the constant deceleration coasting recovery stage on the basis of a vehicle speed at the recovery start moment, a distance from the vehicle to the deceleration region ahead at the recovery start moment, and the vehicle's future target speed $V_f$, and controls the vehicle speed to follow the optimal economic vehicle speed curve of the constant deceleration coasting recovery stage, so as to drive the engine and motor and recover kinetic energy.

Embodiment 8

In the new energy vehicle coasting control system based on embodiment 6, the vehicle speed trajectory planning and following module calculates a time by which the vehicle speed at a pedal release moment reduces to the vehicle's future target speed, divides the time into multiple discrete moments using a discrete time interval T, and performs iterative calculation to obtain cumulative recovered electric energy of the constant deceleration from the current vehicle speed to the vehicle's future target speed by using each discrete moment as the recovery start moment, wherein a discrete moment corresponding to maximum cumulative recovered electric energy among all the discrete moments is taken out and used as the recovery start moment $t_{strt}$, i.e., the moment for starting to drive the engine.

The $k$-th discrete moment corresponds to cumulative recovered electric energy $J_k$, which is obtained by subtracting rolling resistance work, drag work, engine starting energy consumption, and driving engine energy consumption from vehicle kinetic energy.

In an example, when determining the recovery start time $t_{strt}$, the discrete time points at which the absolute value of deceleration during the constant deceleration coasting recovery stage is greater than a preset acceleration are abandoned, and the discrete time point at which the deceleration time from the current vehicle speed $V_0$ to the vehicle's future target speed $V_f$ is greater than a preset time length is abandoned. With regard to the driving sensation during deceleration, the discrete time points corresponding to excessive deceleration and excessive coasting time will be discarded.

In an example, the preset acceleration is between 2 meters per second squared and 3 meters per second squared.

After receiving the coasting activation signal, if a motor and an engine in a power transmission chain structure cannot be decoupled, taking a 48V hybrid electric vehicle of a P0 structure as an example, the engine thereof is driven and remains in a driven state during a motor torque recovery process. Therefore, it is necessary to consider losses of energy consumption and driving work of the engine being driven by the motor.

In order to reduce the energy loss of the driving work of the engine, the coasting recovery should be started as late as possible. However, the later the recovery, the slower the vehicle speed decreases, resulting in a significant cumulative loss of the wind resistance work, particularly in the case of a relatively high initial vehicle speed. Therefore, the selection of a recovery start time requires comprehensive consideration of the two factors, so as to maximize cumulative recovered electric energy.

In the new energy vehicle coasting control system of embodiment 8, using the iterative calculation mode, the vehicle speed trajectory planning and following module calculates and discretizes the time by which the vehicle speed at the pedal release moment reduces to the target vehicle speed, and performs iterative calculation to obtain the cumulative recovered electric energy of the constant deceleration from the current vehicle speed to the target vehicle speed at each discrete moment, wherein the discrete moment corresponding to the maximum cumulative recovered electric energy among all the discrete moments is taken out and used as the recovery start moment $t_{strt}$, i.e., the moment of starting to drive the engine.

Embodiment 9

In the new energy vehicle coasting control system based on embodiment 1, the intelligent connected information collected by the environment sensing system includes vehicle ahead information, current vehicle information, information on traffic ahead, information on traffic lights ahead, and navigation information.

After the pedal is released, the vehicle speed trajectory planning and following module, after receiving the coasting activation signal, plans the optimal economic vehicle speed curve on the basis of the current vehicle speed $V_0$ at a pedal release moment, the vehicle's future target speed $V_f$, the distance $s_f$ from the vehicle to the deceleration region ahead, vehicle ahead speed, and a distance from the vehicle ahead to the current vehicle, and controls the vehicle speed to follow the optimal economic vehicle speed curve, so as to drive the engine and motor and recover kinetic energy.

In an example, the vehicle ahead information and the current vehicle information each include a position and a vector speed.

In the new energy vehicle coasting control system of embodiment 9, the case of a vehicle ahead suddenly cutting in front or a vehicle ahead suddenly decelerating during the coasting is also considered in planning the optimal economic vehicle speed curve. In order to maintain a safe distance from the vehicle ahead, a vehicle speed of the vehicle ahead and a distance from the current vehicle to the vehicle ahead are collected, an optimal economic vehicle speed curve is planned based on the distance to the vehicle ahead and the vehicle speed of the vehicle ahead, and attention is paid to a switch logic design between a vehicle ahead scenario and a conventional speed limit ahead scenario.

Embodiment 10

In the new energy vehicle coasting control system based on embodiment 1, the vehicle speed trajectory planning and following module includes an MPC controller.

The MPC controller selects a model predictive control (MPC) algorithm to perform following control, and controls the vehicle speed to follow the optimal economic vehicle speed curve, so as to drive the engine and motor and recover kinetic energy.

In the new energy vehicle coasting control system of embodiment 10, after the vehicle speed trajectory planning is completed, a control object is changed to be enabling the entire vehicle speed trajectory to accurately follow the planned vehicle speed trajectory. By selecting the model predictive control (MPC) algorithm to perform the following control, a global optimization problem is transformed into a local optimization problem within a predicted sight distance, reducing calculation load, so as to achieve online real-time control. Moreover, the MPC algorithm has strong robustness and can online correct a deviation from an ideal state caused by a model mismatch and an environmental disturbance, achieving a good trajectory following control effect.

Embodiment 11

In the new energy vehicle coasting control system based on embodiment 10, the MPC controller includes an adaptive MPC (AMPC) algorithm module, a state observer, and a model linearization module.

Based on Kalman filtering, the state observer obtains an optimal estimated value $\hat{x}(k)$ of a group of state variables according to an actual measured output $y(k)$ of the motor recovery torque.

The model linearization module is used for linearizing a vehicle longitudinal dynamics model.

The AMPC algorithm module is used for calculating a torque control amount w according to the linearized vehicle longitudinal dynamics model, the optimal economic vehicle speed curve $r(i)$, and the optimal estimated value $\hat{x}(k)$ of the state variables, and controlling the motor recovery torque.

In the new energy vehicle coasting control system of embodiment 11, a state quantity in the vehicle longitudinal dynamics model is also an actual measured output of an observable motor recovery torque. In order to avoid the impacts of a measurement error and a model error, it is necessary to correct and filter a measured result of the actual measured output $y(k)$ of the motor recovery torque.

Embodiment 12

In the new energy vehicle coasting control system based on embodiment 11, at each time node, the state observer needs to perform iterative calculation on an observation gain matrix K by using a covariance matrix of a model predicted value

$$\dot{x}(k)$$

and the actual measured output *y(k)*, so as to obtain the optimal estimated value $\hat{x}(k)$ of the group of state variables by means of a calculation formula of the model predicted value

$$\dot{x}(k)$$

:

$$\hat{x}(k) = \dot{x}(k) + K \cdot (y(k) - \dot{x}(k));$$

in the formula,

$$\dot{x}(k)$$

is the model predicted value, and K is the observation gain matrix.

Embodiment 13

In the new energy vehicle coasting control system based on embodiment 11,

$$Q = \sum_{i=k+1}^{k+p}(y_p(i|k) - r(i))^2;$$

$$w_{min} \leq w \leq w_{max};$$

and

$$\Delta w_{min} \leq \Delta w \leq \Delta w_{max};$$

wherein Q is an objective function, a target trajectory *r(i)* is the optimal economic vehicle speed curve, $y_p(i|k)$ is obtained by real-time iteration of the linearized vehicle longitudinal dynamics model, *p* is a positive integer, w is the torque control amount, $w_{max}$ and $w_{min}$ represent upper and lower limits of motor demand torque obtained from charging performance limitations of the motor and battery, and $\Delta w_{max}$ and $\Delta w_{min}$ are upper and lower limits of a change rate of the motor demand torque when considering the driving sensation.
In the AMPC algorithm module, the objective function Q selects and accumulates differences between the output $y_p(i|k)$ of the discrete model within a prediction time domain window ($T_p = [k + 1: k + p]$) and the target trajectory *r(i)*, and based on the objective function Q, the optimal estimated value $\hat{x}(k)$ of the state variables, and constraints $w_{max}$, $w_{min}$, $\Delta w_{max}$, $\Delta w_{min}$, optimization in each prediction time domain is achieved by means of Lagrange operator-based linear quadratic programming, obtaining a control variable sequence with a minimum objective function in the corresponding prediction time domain, wherein a first value is used as the current torque control amount w and sent to the motor, and the current process is repeated at a next moment.

Embodiment 14

In the new energy vehicle coasting control system based on embodiment 11, the model linearization module linearizes the vehicle longitudinal dynamics model by means of Taylor expansion at each time point in the prediction time domain.

In the new energy vehicle coasting control system of embodiment 12, since that the vehicle longitudinal dynamics model has strong nonlinear time-varying characteristics, and engineering application of a nonlinear MPC algorithm is far less wide and convenient than that of the linear MPC algorithm in embedded code development, during solution, the model is linearized by means of Taylor expansion at each time point in the prediction time domain.

The above new energy vehicle coasting control system can be applied to achieve a predictive coasting recovery function in a variety of deceleration scenarios, such as a speed limit region ahead, a slow travelling vehicle, a bend, congestion, and a traffic light intersection. There are slight differences in the specific implementation content of the function in different deceleration scenarios, and corresponding content may be developed for a specific deceleration scenario.

Only some of the embodiments of the present application are described above and are not intended to limit the present application. Any modifications, equivalent replacements, improvements, etc. made within the spirit and principles of the present application should be included in the scope of protection of the present application.

**Claims**

1. An intelligent connected information-based new energy vehicle coasting control system, comprising an intelligent connected system, a driver coasting prompt module, and a vehicle speed trajectory planning and following module; wherein

   the intelligent connected system is used for parsing intelligent connected information collected by an environment sensing system to obtain coasting control parameters, the coasting control parameters comprising a distance $s_f$ from a vehicle to a deceleration region ahead and a vehicle's future target speed $V_f$;
   when the distance $s_f$ from the vehicle to the deceleration region ahead is less than a coasting distance $s_0$ by which the vehicle at a current vehicle speed $V_0$ coasts until reaching the vehicle's future target speed $V_f$, the driver coasting module outputs a coasting activation signal to the vehicle speed trajectory planning and following module and outputs driver pedal release prompt information; and
   after a pedal is released, the vehicle speed trajectory planning and following module, after receiving the coasting activation signal, plans an optimal economic vehicle speed curve on the basis of an optimization algorithm, and controls vehicle coasting and kinetic energy recovery on the basis of the optimal economic vehicle speed curve.

2. The intelligent connected information-based new energy vehicle coasting control system according to claim 1, wherein

   when the vehicle reaches the deceleration region ahead, the driver coasting module outputs a coasting exit signal to the vehicle speed trajectory planning and following module; and
   after receiving the coasting exit signal, the vehicle speed trajectory planning and following module disables a vehicle speed trajectory planning and following function.

3. The intelligent connected information-based new energy vehicle coasting control system according to claim 1, wherein

   the coasting control parameters further comprise a slope angle $\beta$:

$$s_0 = \frac{v_0^2 - v_f^2 - \sum \frac{C_D \rho A v^3}{m}}{2(\mu g \cos\beta + g \sin\beta)}; \quad v = V_0 + \alpha T; \quad \alpha = -\mu g cos\beta - msin\beta - \frac{C_D \rho A v^2}{2m};$$

   in the formula, $V_0$ is the current vehicle speed, $C_D$ is a aerodynamic drag coefficient, $\rho$ is air density, $A$ is a frontal area, m is a vehicle mass, $\mu$ is a rolling resistance coefficient, g is gravitational acceleration, $\alpha$ is vehicle acceleration, $v$ represents a predicted coasting process vehicle speed, which is iteratively calculated from the vehicle acceleration $\alpha$ calculated by the longitudinal dynamics formula and the current vehicle speed $V_0$, and T represents a discrete time interval.

4. The intelligent connected information-based new energy vehicle coasting control system according to claim 1, wherein

when the distance $s_f$ from the vehicle to the deceleration region ahead is less than the coasting distance $s_0$ by which the vehicle at the current vehicle speed $V_0$ coasts until reaching the vehicle's future target speed $V_f$ and is greater than a minimum deceleration distance $s_1$, $0 < s_1 < s_0$, the driver coasting module outputs the coasting activation signal to the vehicle speed trajectory planning and following module and outputs the driver pedal release prompt information.

5. The intelligent connected information-based new energy vehicle coasting control system according to claim 4, wherein
the driver coasting module calculates the minimum deceleration distance on the basis of a maximum motor recovery torque $T_{min}$ and maximum deceleration $\alpha_{max}$ for acceptable driving sensations.

6. The intelligent connected information-based new energy vehicle coasting control system according to claim 5, wherein
the driver coasting module is calibrated with the aerodynamic drag coefficient $C_D$, the air density $\rho$, the frontal area $A$, the rolling resistance coefficient $\mu$, the maximum motor recovery torque $T_{min}$, and the maximum deceleration $\alpha_{max}$ for acceptable driving sensations.

7. The intelligent connected information-based new energy vehicle coasting control system according to claim 3, wherein
the driver coasting module obtains the vehicle mass m via iterative calculation using a recursive least square method, or is calibrated with the vehicle mass m.

8. The intelligent connected information-based new energy vehicle coasting control system according to claim 3, wherein
the rolling resistance coefficient $\mu$ is obtained by first obtaining a vehicle speed curve using a coasting method and then fitting the vehicle speed curve into a quadratic polynomial of the vehicle speed.

9. The intelligent connected information-based new energy vehicle coasting control system according to claim 1, wherein
the intelligent connected information collected by the environment sensing system comprises information on traffic ahead, information on traffic lights ahead, and navigation information.

10. The intelligent connected information-based new energy vehicle coasting control system according to claim 1, wherein
the environment sensing system comprises at least one of a high-precision radar, a high-resolution camera, and a high-precision map.

11. The intelligent connected information-based new energy vehicle coasting control system according to claim 1, wherein

the new energy vehicle is a hybrid electric vehicle, a motor and an internal combustion engine in a vehicle power transmission chain structure are decouplable, and the vehicle can be driven independently by the motor; or the new energy vehicle is a pure electric vehicle; and
after the pedal is released, the vehicle speed trajectory planning and following module, after receiving the coasting activation signal, plans a constant deceleration vehicle speed curve as the optimal economic vehicle speed curve on the basis of the current vehicle speed $V_0$, the vehicle's future target speed $V_f$, and the distance $s_f$ from the vehicle to the deceleration region ahead, and controls the vehicle speed to follow the optimal economic vehicle speed curve, so as to drive the motor and recover kinetic energy.

12. The intelligent connected information-based new energy vehicle coasting control system according to claim 1, wherein

the new energy vehicle is a hybrid electric vehicle, and a motor and an internal combustion engine in a power transmission chain structure are not decouplable; after the pedal is released, the vehicle speed trajectory planning and following module, after receiving the coasting activation signal, plans the optimal economic vehicle speed curve, which is divided by a recovery start moment into two stages: a preceding pure coasting non-recovery stage and a later constant deceleration coasting recovery stage;
during the pure coasting non-recovery phase, the vehicle speed trajectory planning and following module performs control to apply no driving force to the vehicle, so as to implement pure coasting; and during the constant deceleration coasting recovery stage, the vehicle speed trajectory planning and following module plans a constant deceleration vehicle speed curve as the optimal economic vehicle speed curve of the constant deceleration coasting recovery stage on the basis of a vehicle speed at the recovery start moment, a distance from the vehicle to the deceleration region ahead at the recovery start moment, and the vehicle's future target speed $V_f$, and controls the vehicle speed to follow the optimal economic vehicle speed curve of the constant deceleration coasting recovery stage, so as to drive the motor and recover kinetic energy.

13. The intelligent connected information-based new energy vehicle coasting control system according to claim 12, wherein

the vehicle speed trajectory planning and following module calculates a time by which the vehicle speed at a pedal release moment reduces to the vehicle's future target speed, divides the time into multiple discrete moments using a discrete time interval T, and performs iterative calculation to obtain cumulative recovered electric energy of the constant deceleration from the current vehicle speed to the vehicle's future target speed by using each discrete moment as the recovery start moment, wherein a discrete moment corresponding to maximum cumulative recovered electric energy among all the discrete moments is taken out and used as the recovery start moment $t_{strt}$, i.e., the moment of starting to drive the engine; and
the $k$-th discrete moment corresponds to cumulative recovered electric energy $J_k$, which is obtained by subtracting rolling resistance work, aerodynamic drag work, engine starting energy consumption, and driving engine energy consumption from vehicle kinetic energy.

14. The intelligent connected information-based new energy vehicle coasting control system according to claim 13, wherein
when determining the recovery start time $t_{strt}$, abandoning the discrete time points at which the absolute value of deceleration during the constant deceleration coasting recovery stage is greater than a preset acceleration, and abandon the discrete time point at which the deceleration time from the current vehicle speed $V_0$ to the vehicle's future target speed $V_f$ is greater than a preset time length considering the driving sensations during deceleration, the discrete time points corresponding to excessive deceleration and excessive coasting time will be discarded.

15. The intelligent connected information-based new energy vehicle coasting control system according to claim 14, wherein
the preset acceleration is between 2 meters per second squared and 3 meters per second squared.

16. The intelligent connected information-based new energy vehicle coasting control system according to claim 1, wherein

the intelligent connected information collected by the environment sensing system comprises vehicle ahead information, current vehicle information, information on traffic ahead, information on traffic lights ahead, and navigation information;
after the pedal is released, the vehicle speed trajectory planning and following module, after receiving the coasting activation signal, plans the optimal economic vehicle speed curve on the basis of the current vehicle speed $V_0$ at a pedal release moment, the vehicle's future target speed $V_f$, the distance $s_f$ from the vehicle to the deceleration region ahead, vehicle ahead speed, and a distance from the vehicle ahead to the current vehicle, and controls the vehicle speed to follow the optimal economic vehicle speed curve, so as to drive the engine and recover kinetic energy.

17. The intelligent connected information-based new energy vehicle coasting control system according to claim 16, wherein
the vehicle ahead information and the current vehicle information each comprise a position and a vector speed.

18. The intelligent connected information-based new energy vehicle coasting control system according to claim 1, wherein

the vehicle speed trajectory planning and following module comprises an MPC controller; and
the MPC controller selects an MPC algorithm to perform following control, and controls the vehicle speed to follow the optimal economic vehicle speed curve, so as to drive the engine and recover kinetic energy.

19. The intelligent connected information-based new energy vehicle coasting control system according to claim 18, wherein

the MPC controller comprises an AMPC algorithm module, a state observer, and a model linearization module; based on Kalman filtering, the state observer obtains an optimal estimated value $\hat{x}(k)$ of a group of state variables according to an actual measured output $y(k)$ of the motor recovery torque;
the model linearization module is used for linearizing a vehicle longitudinal dynamics model; and
the AMPC algorithm module is used for calculating a torque control amount w according to the linearized vehicle longitudinal dynamics model, the optimal economic vehicle speed curve $r(i)$, and the optimal estimated value $\hat{x}(k)$ of the state variables, and controlling the motor recovery torque.

20. The intelligent connected information-based new energy vehicle coasting control system according to claim 19, wherein

at each time node, the state observer needs to perform iterative calculation on an observation gain matrix K by using a covariance matrix of a model predicted value

$$\dot{x}(k)$$

and the actual measured output $y(k)$, so as to obtain the optimal estimated value $\hat{x}(k)$ of the group of state variables by means of a calculation formula of the model predicted value

$$\dot{x}(k)$$

:

$$\hat{x}(k) = \dot{x}(k) + K \cdot (y(k) - \dot{x}(k));$$

in the formula, K is the observation gain matrix.

21. The intelligent connected information-based new energy vehicle coasting control system according to claim 19, wherein

$$Q = \sum_{i=k+1}^{k+p}(y_p(i|k) - r(i))^2;$$

$$w_{min} \leq w \leq w_{max};$$

and

$$\Delta w_{min} \leq \Delta w \leq \Delta w_{max};$$

wherein Q is an objective function, a target trajectory $r(i)$ is the optimal economic vehicle speed curve, $y_p(i|k)$ is obtained by real-time iteration of the linearized vehicle longitudinal dynamics model, $p$ is a positive integer, w is the torque control amount, $w_{max}$ and $w_{min}$ represent upper and lower limits of motor demand torque obtained from charging performance limitations of the motor and battery, and $\Delta w_{max}$ and $\Delta w_{min}$ are upper and lower limits of a change rate of the motor demand torque considering the driving sensations;
in the AMPC algorithm module, the objective function Q selects and accumulates differences between the output $y_p(i|k)$ of the discrete model within a prediction time domain window ($T_p = [k + 1: k + p]$) and the target trajectory $r(i)$, and based on the objective function Q, the optimal estimated value $\hat{x}(k)$ of the state variables, and constraints $w_{max}$, $w_{min}$, $\Delta w_{max}$, $\Delta w_{min}$, optimization in each prediction time domain is achieved by means of Lagrange operator-based linear quadratic programming, obtaining a control variable sequence with a minimum objective function in the corresponding prediction time domain, wherein a first value is used as the current torque control amount *w* and sent to the motor, and the current process is repeated at a next moment.

22. The intelligent connected information-based new energy vehicle coasting control system according to claim 19, wherein
the model linearization module linearizes the vehicle longitudinal dynamics model by means of Taylor expansion at each time point in the prediction time domain.

23. An intelligent connected information-based new energy vehicle coasting control method, wherein coasting control parameters are obtained by parsing intelligent connected information collected by an environment sensing system of an intelligent connected system, the coasting control parameters comprising a distance $s_f$ from a vehicle to a deceleration region ahead and a vehicle's future target speed $V_f$;

when the distance $s_f$ from the vehicle to the deceleration region ahead is less than a coasting distance $s_0$ by which the vehicle at a current vehicle speed $V_0$ coasts until reaching the vehicle's future target speed $V_f$, a driver coasting module outputs a coasting activation signal to the vehicle speed trajectory planning and following module and outputs driver pedal release prompt information; and
after a pedal is released, a vehicle speed trajectory planning and following module, after receiving the coasting activation signal, plans an optimal economic vehicle speed curve on the basis of an optimization algorithm, and controls vehicle coasting and kinetic energy recovery on the basis of the optimal economic vehicle speed curve.

24. The intelligent connected information-based new energy vehicle coasting control method according to claim 23, wherein

when the vehicle reaches the deceleration region ahead, the driver coasting module outputs a coasting exit signal to the vehicle speed trajectory planning and following module; and
after receiving the coasting exit signal, the vehicle speed trajectory planning and following module disables a vehicle speed trajectory planning and following function.

25. The intelligent connected information-based new energy vehicle coasting control method according to claim 23, wherein

the coasting control parameters further comprise a slope angle $\beta$:

$$s_0 = \frac{v_0^2 - v_f^2 - \sum \frac{C_D \rho A v^3}{m}}{2(\mu g \cos\beta + g \sin\beta)}; \quad v = V_0 + \alpha T; \quad \alpha = -\mu g cos\beta - msin\beta - \frac{C_D \rho A v^2}{2m};$$

in the formula, $V_0$ is the current vehicle speed, $C_D$ is a aerodynamic drag coefficient, $\rho$ is air density, $A$ is a frontal area, m is a vehicle mass, $\mu$ is a rolling resistance coefficient, g is gravitational acceleration, $\alpha$ is vehicle acceleration, $v$ represents a predicted coasting process vehicle speed , which is iteratively calculated from the vehicle acceleration $\alpha$ calculated by the longitudinal dynamics formula and the current vehicle speed $V_0$, and $T$ represents a discrete time interval.

26. The intelligent connected information-based new energy vehicle coasting control method according to claim 23, wherein
when the distance $s_f$ from the vehicle to the deceleration region ahead is less than the coasting distance $s_0$ by which the vehicle at the current vehicle speed $V_0$ coasts until reaching the vehicle's future target speed $V_f$ and is greater than a minimum deceleration distance $s_1$, $0 < s_1 < s_0$, the driver coasting module outputs the coasting activation signal to the vehicle speed trajectory planning and following module and outputs the driver pedal release prompt information.

27. The intelligent connected information-based new energy vehicle coasting control method according to claim 26, wherein
the driver coasting module calculates the minimum deceleration distance on the basis of a maximum motor recovery torque $T_{min}$ and maximum deceleration $\alpha_{max}$ for acceptable driving sensations.

28. The intelligent connected information-based new energy vehicle coasting control method according to claim 27, wherein
the driver coasting module is calibrated with the aerodynamic drag coefficient $C_D$, the air density $\rho$, the frontal area $A$, the rolling resistance coefficient $\mu$, the maximum motor recovery torque $T_{min}$, and the maximum deceleration $\alpha_{max}$ for acceptable driving sensations.

29. The intelligent connected information-based new energy vehicle coasting control method according to claim 25, wherein
the driver coasting module obtains the vehicle mass m via iterative calculation using a recursive least square method, or is calibrated with the vehicle mass m.

30. The intelligent connected information-based new energy vehicle coasting control method according to claim 25, wherein
the rolling resistance coefficient $\mu$ is obtained by first obtaining a vehicle speed curve using a coasting method and then fitting the vehicle speed curve into a quadratic polynomial of the vehicle speed.

31. The intelligent connected information-based new energy vehicle coasting control method according to claim 23, wherein
the intelligent connected information collected by the environment sensing system comprises information on traffic ahead, information on traffic lights ahead, and navigation information.

32. The intelligent connected information-based new energy vehicle coasting control method according to claim 23, wherein
the environment sensing system comprises at least one of a high-precision radar, a high-resolution camera, and a high-precision map.

33. The intelligent connected information-based new energy vehicle coasting control method according to claim 23, wherein

the new energy vehicle is a hybrid electric vehicle, a motor and an internal combustion engine in a vehicle power transmission chain structure are decouplable, and the vehicle can be driven independently by the motor; or the new energy vehicle is a pure electric vehicle; and
after the pedal is released, the vehicle speed trajectory planning and following module, after receiving the coasting activation signal, plans a constant deceleration vehicle speed curve as the optimal economic vehicle speed curve on the basis of the current vehicle speed $V_0$, the vehicle's future target speed $V_f$, and the distance $s_f$ from the vehicle to the deceleration region ahead, and controls the vehicle speed to follow the optimal economic vehicle speed curve, so as to drive the engine and recover kinetic energy.

34. The intelligent connected information-based new energy vehicle coasting control method according to claim 23, wherein

the new energy vehicle is a hybrid electric vehicle, and a motor and an internal combustion engine in a power transmission chain structure are not decouplable; after the pedal is released, the vehicle speed trajectory planning and following module, after receiving the coasting activation signal, plans the optimal economic vehicle speed curve, which is divided by a recovery start moment into two stages: a preceding pure coasting non-recovery stage and a later constant deceleration coasting recovery stage;
during the pure coasting non-recovery phase, the vehicle speed trajectory planning and following module performs control to apply no driving force to the vehicle, so as to implement pure coasting; and during the constant deceleration coasting recovery stage, the vehicle speed trajectory planning and following module plans a constant deceleration vehicle speed curve as the optimal economic vehicle speed curve of the constant deceleration coasting recovery stage on the basis of a vehicle speed at the recovery start moment, a distance from the vehicle to the deceleration region ahead at the recovery start moment, and the vehicle's future target speed $V_f$, and controls the vehicle speed to follow the optimal economic vehicle speed curve of the constant deceleration coasting recovery stage, so as to drive the engine and recover kinetic energy.

35. The intelligent connected information-based new energy vehicle coasting control method according to claim 34, wherein

the vehicle speed trajectory planning and following module calculates a time by which the vehicle speed at a pedal release moment reduces to the vehicle's future target speed, divides the time into multiple discrete moments using a discrete time interval T, and performs iterative calculation to obtain cumulative recovered electric energy of the constant deceleration from the current vehicle speed to the vehicle's future target speed by using each discrete moment as the recovery start moment, wherein a discrete moment corresponding to maximum cumulative recovered electric energy among all the discrete moments is taken out and used as the recovery start moment $t_{strt}$, i.e., an engine driving start moment; and

the $k$-th discrete moment corresponds to cumulative recovered electric energy $J_k$, which is obtained by subtracting rolling resistance work, aerodynamic drag work, engine starting energy consumption, and engine driving work from vehicle kinetic energy.

36. The intelligent connected information-based new energy vehicle coasting control method according to claim 35, wherein

when determining the recovery start time $t_{strt}$, abandoning the discrete time points at which the absolute value of deceleration during the constant deceleration coasting recovery stage is greater than a preset acceleration, and abandon the discrete time point at which the deceleration time from the current vehicle speed $V_0$ to the vehicle's future target speed $V_f$ is greater than a preset time length considering the driving sensations during deceleration, the discrete time points corresponding to excessive deceleration and excessive coasting time will be discarded.

37. The intelligent connected information-based new energy vehicle coasting control method according to claim 36, wherein

the preset acceleration is between 2 meters per second squared and 3 meters per second squared.

38. The intelligent connected information-based new energy vehicle coasting control method according to claim 23, wherein

the intelligent connected information collected by the environment sensing system comprises vehicle ahead information, current vehicle information, information on traffic ahead, information on traffic lights ahead, and navigation information;

after the pedal is released, the vehicle speed trajectory planning and following module, after receiving the coasting activation signal, plans the optimal economic vehicle speed curve on the basis of the current vehicle speed $V_0$ at a pedal release moment, the vehicle's future target speed $V_f$, the distance $s_f$ from the vehicle to the deceleration region ahead, vehicle ahead speed, and a distance from the vehicle ahead to the current vehicle, and controls the vehicle speed to follow the optimal economic vehicle speed curve, so as to drive the engine and recover kinetic energy.

39. The intelligent connected information-based new energy vehicle coasting control method according to claim 38, wherein

the vehicle ahead information and the current vehicle information each comprise a position and a vector speed.

40. The intelligent connected information-based new energy vehicle coasting control method according to claim 23, wherein

the vehicle speed trajectory planning and following module comprises an MPC controller; and

the MPC controller selects an MPC algorithm to perform following control, and controls the vehicle speed to follow the optimal economic vehicle speed curve, so as to drive the engine and recover kinetic energy.

41. The intelligent connected information-based new energy vehicle coasting control method according to claim 40, wherein

the MPC controller comprises an AMPC algorithm module, a state observer, and a model linearization module;

based on Kalman filtering, the state observer obtains an optimal estimated value $\hat{x}(k)$ of a group of state variables according to an actual measured output $y(k)$ of the motor recovery torque;

the model linearization module is used for linearizing a vehicle longitudinal dynamics model; and

the AMPC algorithm module is used for calculating a torque control amount w according to the linearized vehicle longitudinal dynamics model, the optimal economic vehicle speed curve $r(i)$, and the optimal estimated value $\hat{x}(k)$ of the state variables, and controlling the motor recovery torque.

42. The intelligent connected information-based new energy vehicle coasting control method according to claim 41, wherein

at each time node, the state observer needs to perform iterative calculation on an observation gain matrix K by using a covariance matrix of a model predicted value

$$\dot{x}(k)$$

and the actual measured output $y(k)$, so as to obtain the optimal estimated value $\hat{x}(k)$ of the group of state variables by means of a calculation formula of the model predicted value

$$\dot{x}(k)$$

:

$$\hat{x}(k) = \dot{x}(k) + K \cdot (y(k) - \dot{x}(k));$$

in the formula, K is the observation gain matrix.

43. The intelligent connected information-based new energy vehicle coasting control method according to claim 41, wherein

$$Q = \sum_{i=k+1}^{k+p}(y_p(i|k) - r(i))^2;$$

$$w_{min} \leq w \leq w_{max};$$

and

$$\Delta w_{min} \leq \Delta w \leq \Delta w_{max};$$

wherein Q is an objective function, a target trajectory $r(i)$ is the optimal economic vehicle speed curve, $y_p(i|k)$ is obtained by real-time iteration of the linearized vehicle longitudinal dynamics model, $p$ is a positive integer, w is the torque control amount, $w_{max}$ and $w_{min}$ represent upper and lower limits of motor demand torque obtained from charging performance limitations of the motor and battery, and $\Delta w_{max}$ and $\Delta w_{min}$ are upper and lower limits of a change rate of the motor demand torque considering the driving sensations;
in the AMPC algorithm module, the objective function Q selects and accumulates differences between the output $y_p(i|k)$ of the discrete model within a prediction time domain window ($T_p = [k + 1: k + p]$) and the target trajectory $r(i)$, and based on the objective function Q, the optimal estimated value $x(k)$ of the state variables, and constraints $w_{max}, w_{min}, \Delta w_{max}, \Delta w_{min}$, optimization in each prediction time domain is achieved by means of Lagrange operator-based linear quadratic programming, obtaining a control variable sequence with a minimum objective function in the corresponding prediction time domain, wherein a first value is used as the current torque control amount w and sent to the motor, and the current process is repeated at a next moment.

44. The intelligent connected information-based new energy vehicle coasting control method according to claim 41, wherein
the model linearization module linearizes the vehicle longitudinal dynamics model by means of Taylor expansion at each time point in the prediction time domain.

45. A new energy vehicle equipped with the intelligent connected information-based new energy vehicle coasting control system according to any one of claims 1-22.

FIG. 1

FIG. 2

FIG. 3

## INTERNATIONAL SEARCH REPORT

| International application No. |
| --- |
| **PCT/CN2021/121062** |

**A. CLASSIFICATION OF SUBJECT MATTER**

B60W 30/18(2012.01)i

According to International Patent Classification (IPC) or to both national classification and IPC

**B. FIELDS SEARCHED**

Minimum documentation searched (classification system followed by classification symbols)

B60W

Documentation searched other than minimum documentation to the extent that such documents are included in the fields searched

Electronic data base consulted during the international search (name of data base and, where practicable, search terms used)

CNPAT, CNKI, EPODOC, WPI: 新能源, 汽车, 滑行, 控制, 能量, 回收, 速度, 距离, energy, vehicle, coast, slide, control, recycle, speed, distance, network,

**C. DOCUMENTS CONSIDERED TO BE RELEVANT**

| Category* | Citation of document, with indication, where appropriate, of the relevant passages | Relevant to claim No. |
| --- | --- | --- |
| PX | CN 112660130 A (UNITED AUTOMOTIVE ELECTRONIC SYSTEMS CO., LTD.) 16 April 2021 (2021-04-16)<br>claims 1-45, description pages 5-10, figures 1-3 | 1-45 |
| X | CN 108058615 A (HUAWEI TECHNOLOGIES CO., LTD.) 22 May 2018 (2018-05-22)<br>description, pages 8-19, and figures 1-11 | 1-45 |
| A | CN 110422050 A (WUHAN UNIVERSITY OF TECHNOLOGY) 08 November 2019 (2019-11-08)<br>entire document | 1-45 |
| A | CN 108515960 A (GEELY AUTOMOBILE RESEARCH INSTITUTE (NINGBO) CO., LTD.; ZHEJIANG GEELY HOLDING GROUP CO., LTD.) 11 September 2018 (2018-09-11)<br>entire document | 1-45 |
| A | CN 111038512 A (UNITED AUTOMOTIVE ELECTRONIC SYSTEMS CO., LTD.) 21 April 2020 (2020-04-21)<br>entire document | 1-45 |
| A | JP 6354241 B2 (ISUZU MOTORS LTD.) 11 July 2018 (2018-07-11)<br>entire document | 1-45 |

☑ Further documents are listed in the continuation of Box C.    ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **02 December 2021** | **10 January 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2021/121062** |

**C.    DOCUMENTS CONSIDERED TO BE RELEVANT**

| Category* | Citation of document, with indication, where appropriate, of the relevant passages | Relevant to claim No. |
|---|---|---|
| A | KR 20160082907 A (KIM SUNG BONG) 11 July 2016 (2016-07-11)<br>entire document | 1-45 |

Form PCT/ISA/210 (second sheet) (January 2015)

**INTERNATIONAL SEARCH REPORT**
Information on patent family members

International application No.

**PCT/CN2021/121062**

| Patent document cited in search report | | | Publication date (day/month/year) | Patent family member(s) | | | Publication date (day/month/year) |
|---|---|---|---|---|---|---|---|
| CN | 112660130 | A | 16 April 2021 | None | | | |
| CN | 108058615 | A | 22 May 2018 | KR | 20190077516 | A | 03 July 2019 |
| | | | | WO | 2018086218 | A1 | 17 May 2018 |
| | | | | KR | 102225006 | B1 | 08 March 2021 |
| | | | | EP | 3536538 | A1 | 11 September 2019 |
| | | | | JP | 2019537414 | A | 19 December 2019 |
| | | | | US | 2019270384 | A1 | 05 September 2019 |
| | | | | EP | 3536538 | A4 | 30 October 2019 |
| CN | 110422050 | A | 08 November 2019 | None | | | |
| CN | 108515960 | A | 11 September 2018 | CN | 108515960 | B | 21 April 2020 |
| CN | 111038512 | A | 21 April 2020 | None | | | |
| JP | 6354241 | B2 | 11 July 2018 | JP | 2015182620 | A | 22 October 2015 |
| KR | 20160082907 | A | 11 July 2016 | None | | | |

Form PCT/ISA/210 (patent family annex) (January 2015)